# EUROPÄISCHE PATENTSCHRIFT

(11) **EP 1 543 254 B1**
(45) Veröffentlichungstag und Bekanntmachung des Hinweises auf die Patenterteilung: **15.10.2008**
(21) Anmeldenummer: 03807820.0
(22) Anmeldetag: 30.08.2003
(51) Int. Cl.: F16F 9/32

(54) **PULVERMETALLURGISCH HERGESTELLTER KOLBENKÖRPER MIT STÜTZSTEGEN UND VERFAHREN ZU SEINER HERSTELLUNG**
POWDER-METALLURGICALLY PRODUCED PISTON BODY COMPRISING SUPPORT WEBS AND METHOD FOR THE PRODUCTION THEREOF
ELEMENT DE PISTON FABRIQUE SELON UNE TECHNIQUE DE METALLURGIE DES POUDRES ET DOTE D'ENTRETOISES D'APPUI, ET PROCEDE DE FABRICATION ASSOCIE

(30) Priorität: 28.09.2002 DE 10245404
(43) Veröffentlichungstag der Anmeldung: 22.06.2005
(73) Patentinhaber: GKN Sinter Metals GmbH, 42477 Radevormwald (DE)
(72) Erfinder: MAY, Ewald, 53175 Bonn (DE); SCHMITT, Rainer, 53343 Wachtberg (DE)
(74) Vertreter: Maxton Langmaack & Partner
(86) Internationale Anmeldenummer: PCT/EP2003/009670
(87) Internationale Veröffentlichungsnummer: WO 2004/033931

(56) Entgegenhaltungen:
- WO-A-00/34681
- DE-A- 10 108 246
- DE-A- 19 847 342

## Beschreibung

Aus DE 101 08 246 A1 ist ein zweiteiliger Kolbenkörper bekannt, der auf seiner Umfangsfläche in einem an eine Kolbenendfläche angrenzenden Bereich mit einem umlaufenden, die Umfangsfläche überragenden Umlaufsteg versehen ist, an den sich bis an die andere Kolbenendfläche erstreckende, parallel mit Abstand nebeneinander angeordnete längslaufende Stützstege anschließend, wobei jeweils zwei benachbarte Stützstege eine nutförmige Ausnehmung begrenzen, wobei auf den Kolbenkörper eine manschettenförmige Dichtung aus einem warmverformbaren Dichtungsmaterial so ausformbar ist, dass sowohl der Umlaufsteg als auch die Stützstege zumindest über einen Teil in ihrer Höhe in das Material der manschettenförmigen Dichtung eingeformt sind.

Aus EP-A-0 658 611 ist ein Stoßdämpferkolben bekannt, der einen Kolbenkörper aufweist, der auf seiner Umfangsfläche mit einem umlaufenden Steg versehen ist, an den sich eine vielzahl von in Achsrichtung verlaufenden Stegen auf einer Seite des umlaufenden Stegs anschließt. Auf diesen Kolbenkörper ist-im Spritzgießverfahren eine Dichtung aus thermoplastischem Kunststoff aufgespritzt, wobei insbesondere die sich in axialer Richtung erstreckenden Stege mit ihren dazwischen liegenden, voll mit Dichtungswerkstoff ausgefüllten Nuten der zuverlässigen Verankerung des Dichtungswerkstoffs und der Führung des Kolbens dienen. Die im Spritzguß aufgebrachte Dichtung ermöglicht eine enge Tolerierung, um das sogenannte "blow-by" zu vermeiden und so eine zuverlässige Abdichtung der einander zugeordneten Zylinderräume zu bewirken. Das Verfahren zur Herstellung derartiger spritzgegossener Dichtungen ist verhältnismäßig aufwendig.

Aus US-A-3 212 411 ist eine Kolben-Zylinder-Anordnung bekannt, deren Kolbenkörper auf seiner Umfangsfläche eine Vielzahl von umlaufenden Rillen aufweist. Zum Aufbringen der Dichtung ist ein napfförmiger Vorformling aus PTFE (Polytetrafluorethylen) vorgesehen, der zunächst auf den Kolbenkörper lose aufgesetzt wird. Der so vorbereitete Kolbenkörper wird anschließend zunächst in einen hoch aufgeheizten Form- und Kalibrierzylinder eingedrückt, wobei unter wärmeeinfluß das PTFE-Material in die Rillen auf der Umfangsfläche des Kolbenkörpers eingepreßt wird- Anschließend wird der Kolbenkörper mit der aufgepreßten Dichtung in einem entsprechend ausgebildeten Kühlzylinder abgekühlt. Die Rillen sind vollständig mit dem Dichtungswerkstoff ausgefüllt, um so eine formschlüssig-feste verbindung der Dichtung mit der Umfangsfläche des Kolbenkörpers zu bewirken. Für den Einsatz als Stoßdämpferkolben muß anschließend noch die die Stirnfläche des Kolbenkörpers auf einer Seite überdeckende Bodenfläche des Vorformling entfernt werden.

Aus EP-A-682 190 ist ein Stoßdämpferkolben bekannt, der sich in seiner Herstellung von dem vorstehend beschriebenen Verfahren im wesentlichen nur dadurch unterscheidet, daß zum Aufbringen der Dichtung statt eines napfförmigen Vorformlings eine gestanzte Kreisringscheibe eingesetzt wird. Diese Kreisringscheibe wird auf ein Ende des Kolbenkörpers aufgesetzt. Der so vorbereitete Kolbenkörper wird wiederum in einen aufgeheizten Form- und Kalibrierzylinder eingepreßt, wobei die Kreisringscheibe als Band auf die Umfangsfläche des Kolbenkörpers umgelegt und anschließend in die in Umfangsrichtung des Kolbenkörpers verlaufenden Rillen unter Wärmeeinfluß eingepreßt wird. Anschließend wird der mit seiner aufgepreßten Dichtung versehene Kolben durch ein Kühlrohr geführt. Der Dichtungswerkstoff füllt auch hierbei die Rillen praktisch vollständig aus, so daß die Dichtung formschlüssig-fest mit der Umfangsfläche des Kolbenkörpers verbunden ist.

Die beiden vorstehend beschriebenen Verfahren weisen den Nachteil auf, daß für das Umformen und das vollständige Einpressen des Dichtungsmaterials in die Rillen auf der Umfangsfläche des Kolbenkörpers erhebliche Preßdrücke erforderlich sein können und das die Dichtung bildende Dichtungsmaterial starken Umformungen unterworfen wird, die nachteilig die Struktur des Dichtungswerkstoffs beeinflußt.

Aus DE-A-198 47 342 ist ein Kolben für eine Kolben-Zylinder-Anordnung, insbesondere Stoßdämpferkolben bekannt, mit einem Kolbenkörper, der auf seiner Umfangsfläche in einem an ein Kolbenende angrenzenden Bereich mit einem umlaufenden, die Umfangsfläche überragenden Umlaufsteg versehen ist, an den sich in Richtung auf das andere Kolbenende erstreckende, parallel mit Abstand nebeneinander angeordnete längslaufende Stützstege anschließen, wobei jeweils zwei benachbarte Stützstege eine nutförmige Ausnehmung begrenzen, die an ihren dem Umlaufsteg abgewandten Enden in Längsrichtung offen sind, und mit einer manschettenförmigen Dichtung aus einem warmverformbaren Dichtungsmaterial, die auf den Kolbenkörper so aufgeformt ist, daß sowohl der Umfangssteg als auch die Stützstege nur über einen Teil ihrer Höhe in das Material der Dichtung eingeformt sind.

Diese vorbekannte Lösung hat gezeigt, daß es für eine gute Abdichtung zwischen der manschettenförmigen Dichtung des Kolbens einerseits und der Außenkontur des Kolbenkörpers andererseits nicht erforderlich ist, daß die Dichtung auf dem vollen Umfang dicht am Kolbenkörper anliegt. Es genügt für eine Reihe von Einsatzfällen, wenn die Dichtmanschette in Umfangsrichtung nur auf dem relativ schmalen Umlaufsteg fest anliegt. Es hat sich ferner überraschenderweise herausgestellt, daß es für eine einwandfreie und zuverlässige Verbindung zwischen Dichtung und Kolbenkörper nicht erforderlich ist, daß die nutförmigen Ausnehmungen zwischen den längslaufenden Stützstegen vom Dichtungsmaterial vollständig ausgefüllt sind. Somit verbleibt ein genügender Freiraum, in den das Dichtungsmaterial bei Ausdehnungen infolge Temperaturerhöhungen ausweichen kann, wobei der Kolben jedoch über die längslaufenden Stützstege einwandfrei geführt ist.

Die Anordnung nur eines, die Umfangsfläche überragenden Umlaufstegs zur Fixierung der manschettenförmigen Dichtung kann unter Umständen nicht ausreichen, so daß die Anordnung von zwei jeweils endseitigen Umlaufstegen wünschenswert ist, die durch die längslaufenden, mit Abstand parallel zueinander angeordneten Stützstege verbunden sind. Die pulvermetallurgische Herstellung eines derartigen Kolbenkörpers durch Pressen eines Grünlings aus einem sinterbaren Metallpulver mit anschließendem Sintern bereitet jedoch erhebliche formungstechnische Probleme, so daß in die DE-A-101 08 246 vorgeschlagen wurde, den Kolbenkörper in zwei Teilkörper zu unterteilen, die jeweils an einem Ende einen Umlaufsteg aufweisen, von dem aus die längslaufenden und mit Abstand zueinander angeordneten Stützstege ausgehen. Die beiden Teilkörper können ohne große Schwierigkeiten jeweils aus einem sinterbaren Metallpulver zu Grünlingen geformt und dann gesintert werden. Der vollständige Kolben wird dann aus den beiden fertig gesinterten Teilen in der Weise zusammengesetzt, daß die Umlaufstege jeweils an dem der Teilungsebene abgewandten Kolbenende angeordnet sind. Durch eine Abschrägung der Stützstege an ihrem der Teilungsebene zugekehrten Ende ist es dann möglich, noch eine zusätzliche Quernut vorzusehen. Der Nachteil dieser Konzeption besteht in einem aufwendigen Fügeverfahren für die beiden Teilkörper, wenn diese in einer definierten Zuordnung zueinander zusammengefügt werden müssen. Dies ist beispielsweise bei Kolbenkörpern für Stoßdämpferkolben der Fall, da hierbei die in den beiden Teilkörpern vorhandenen Teilkanäle genau fluchtend sein müssen.

Der Erfindung liegt die Aufgabe zugrunde, einen einfacher herzustellenden Kolben, insbesondere Stoßdämpferkolben zu schaffen.

Diese Aufgabe wird gemäß der Erfindung durch einen einteiligen Kolbenkörper mit den Merkmalen des Anspruchs 1 gelöst.

Ein Verfahren zur Herstellung des erfindungsgemäßen Kolbenkörpers ist im Anspruch 6 angegeben.

Weitere Ausgestaltungen der Erfindung sind in der nachfolgenden Beschreibung von Ausführungsbeispielen und den Unteransprüchen angegeben.

Die Erfindung wird anhand schematischer Zeichnungen eines Ausführungsbeispiels näher erläutert. Es zeigen:
- Fig. 1: einen Teilschnitt in Achsrichtung durch eine Kolben-Zylinder-Anordnung für einen Stoßdämpfer,
- Fig. 2: eine Seitenansicht, teilweise im Schnitt, eines fertig gesinterten Rohligs für einen Stoßdämpfer,
- Fig. 3: einen schematischen Horizontalschnitt durch den Rohling gemäß der Linie III-III in Fig. 2 ohne Dichtmanschette,
- Fig. 4: eine Seitenansicht eines fertig geformten Kolbenkörpers, teilweise im Schnitt, mit aufgebrachter Dichtmanschette,
- Fig. 5: einen Teilschnitt gem. Fig. 4 in vergrößerter Darstellung,
- Fig. 6: eine Vorrichtung zum Formen von Quernuten und Kalibrieren eines Kolbenkörperrohlings als Schritt des Herstellungsverfahrens,
- Fig. 7: die Vorrichtung gemäß Fig. 6 während des Formungs- und Kalibrierschrittes,
- Fig. 8: die Vorrichtung gem. Fig. 6 am Ende des Formungs- und Kalibrierschrittes,
- Fig. 9: einen Vertikalschnitt durch die Formungsstation des Werkzeuges gem. Fig. 6 mit eingelegtem Rohling beim Formungsprozeß,
- Fig. 10: in vergrößerter Darstellung die Ausbildung des Prägewerkzeuges,
- Fig. 11: eine Aufsicht auf die Formungsstation gem. Fig. 9 mit einer Anordnung der Prägewerkzeuge.

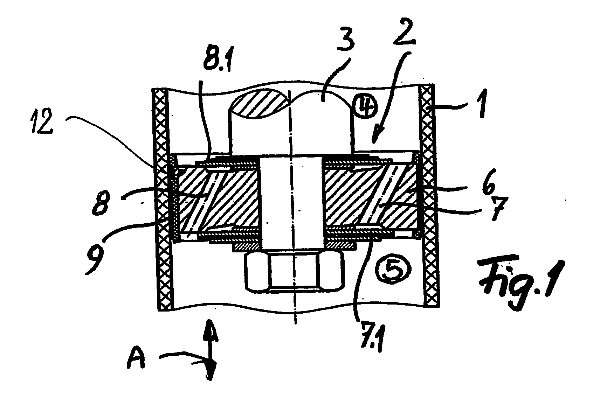

Fig. 1 zeigt als Funktionsschema einen axialen Schnitt durch einen Stoßdämpfer, der zwei relativ zueinander bewegbare Teile, beispielsweise eine Fahrzeugachse und einen Fahrzeugrahmen miteinander verbindet. Der Stoßdämpfer weist einen Zylinderteil 1 auf, der mit einem der beiden relativ zueinander bewegbaren Teile verbunden ist. Im Zylinder 1 ist ein Kolben 2 geführt, der an einer Kolbenstange 3 befestigt ist, die mit ihrem freien Ende am anderen Teil der beiden relativ zueinander bewegbaren Teile festgelegt ist. Der Zylinder 1 ist hierbei beidseitig geschlossen und mit einer Hydraulikflüssigkeit gefüllt, so daß die Kolben-Zylinder-Anordnung doppelt wirkend ausgelegt ist, wobei der Kolben zwei Zylinderräume 4, 5 voreinander trennt.

Der Kolbenkörper 6 des Kolbens 2 weist mehrere nebeneinander verlaufende Durchtrittskanäle 7, 8 auf. Die Durchtrittskanäle 7, 8 sind jeweils auf ihrer in der Funktion noch zu erläuternden Austrittsseite mit einem Drosselventil 7.1 bzw. 8.1 abgedeckt. Die Anordnung ist hierbei so getroffen, daß jeweils mehrere Durchtrittskanäle 7 und mehrere Durchtrittskanäle 8 alternierend um die Zylinderachse angeordnet vorgesehen sind.

Die Umfangsfläche des Kolbens 2 ist mit einer manschettenförmigen Dichtung 9 versehen, die für eine Abdichtung des Zylinderraums 4 gegenüber dem Zylinderraum 5 sorgt. Bei einer Bewegung des Kolbens 2 in den Zylinderraum 4 hinein, wird die Flüssigkeit durch die Durchtrittskanäle 7 gegen die Rückstellkraft der Drosselventile 7.1 gepreßt. Die Durchtrittsöffnungen 8 werden hierbei durch den auf die Drosselventile 8.1 lastenden Druck des Flüssigkeitsraums 4 verschlossen gehalten. Bei einer Bewegung in umgekehrter Richtung werden die Durchtrittskanäle 7 durch die Drosselventile 7.1 geschlossen, während die Flüssigkeit durch die durchströmenden Kanäle 8 aus dem Zylinderraum 5 in den Zylinderraum 4 zurückströmen kann.

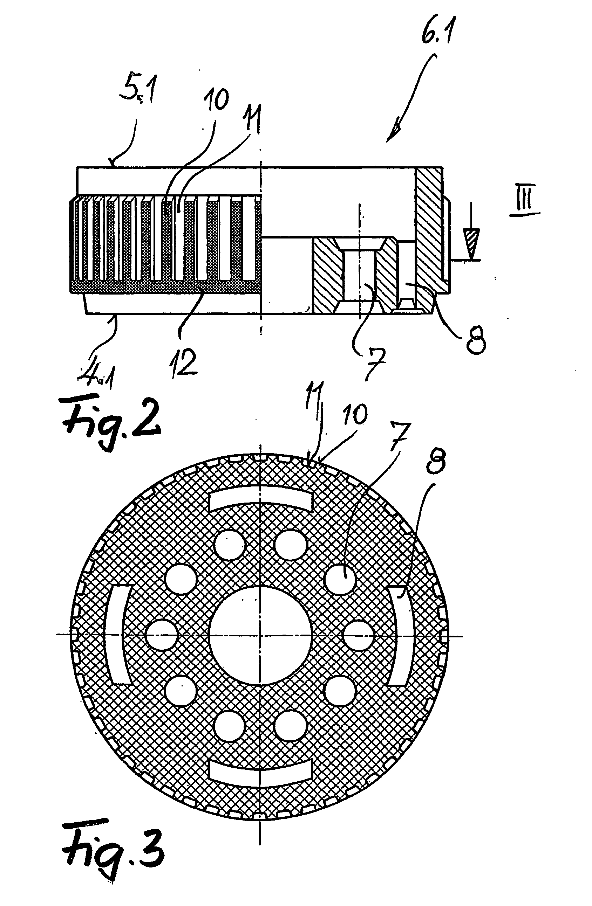

Da nun ein derartiger Kolbenkörper, wie vorstehend angegeben, hin und her bewegt wird und bei hohen Beanspruchungen die manschettenförmige Dichtung 9 auch bei der Rückbewegung entsprechend belastet wird, reicht ein endseitiger Umlaufsteg an einem Ende des Kolbenkörpers für eine sichere Fixierung der manschettenförmigen Dichtung gegenüber Belastung in axialer Richtung unter Umständen nicht mehr aus. Um nun einen derartigen Kolbenkörper in einteiliger Form so herstellen zu können, daß zusätzliche Quernuten zur Fixierung der manschettenförmigen Dichtung vorhanden sind, wird zunächst aus sinterbarem Metallpulver ein Grünling in der in Fig. 2 dargestellten und nachstehend noch näher erläuterten Form gepreßt und anschließend zu einem Rohling 6.1 fertig gesintert.

Der Rohling 6.1 ist auf seiner Umfangsfläche mit einer Vielzahl von längslaufenden Stützstegen 10 versehen, die jeweils entsprechende nutförmige Ausnehmungen 11 begrenzen und die sich von der Stirnfläche 4.1, der ein Umlaufsteg 12 zugeordnet ist, bis an das andere Ende des Rohlings 6.1 im Bereich nahe der Stirnfläche 5.1 erstrecken. Der Umlaufsteg 12 und die längslaufenden Stützstege 10, die eine Außenfläche des Kolbenkörpers 6 bilden, sind niveaugleich. Aus Gründen einer besseren Darstellung ist diese Außenfläche mit einer Schraffur versehen. Die Stützstege 10 und entsprechend die Nuten 11 verlaufen achsparallel.

In Fig. 3 ist der Kolbenkörper 6 in einem Horizontalschnitt gem. der Linie III-III in Fig. 2 dargestellt, so daß die Struktur von Stützstegen 10 und Nuten 11 erkennbar ist.

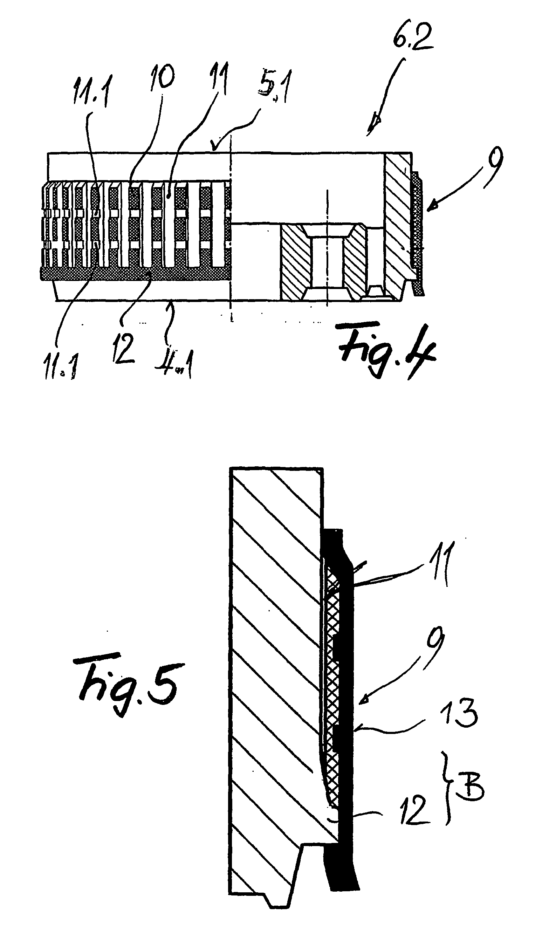

In Fig. 4 ist der Kolbenkörper 6 teilweise im Schnitt und in der Seitenansicht ohne Dichtung 9 in seiner endgültigen Form nach dem Einbringen von Quernuten 11.1 auf der Oberfläche der Längsstege 10 dargestellt. Die Quernuten 11.1 werden durch ein Prägeverfahren, wie nachstehend noch erläutert werden wird, in den gesinterten Rohling 6.1 eingebracht, der dann nach dem Prägeverfahren noch kalibriert wird. Auf den so fertiggestellten kalibrierten Kolbenkörper 6 wird dann die Dichtung 9 aufgebracht.

Die auf dem Umfang des Kolbenkörpers 6 angeordnete manschettenförmige Dichtung 9 besteht aus einem warmverformbaren Kunststoff, vorzugsweise aus PTFE. Die manschettenförmige Dichtung 9 ist bei dem hier dargestellten Ausführungsbeispiel durch Warmumformung auf den Kolbenkörper 6 aufgeformt worden.

Bei der Warmumformung des Dichtungsmaterials, das aus einer vorkonfektionierten Kreisringscheibe oder einem vorkonfektionierten Rohrstück bestehen kann, werden die Stützstege 10 und der Umlaufsteg 12 nur über einen Teil ihrer Höhe in das Material der manschettenförmigen Dichtung 9 eingeformt, so daß zwischen dem Material der Dichtung 9 und dem Boden nutförmigen Ausnehmungen 11 noch ein gewisser Freiraum verbleibt, so daß beim Formen der Dichtung 9 das Dichtungsmaterial frei und ohne Zwängung in die Nut 11 einfließen kann. Bei diesem Umformungsvorgang wird die zylindrische Außenfläche 13 der Dichtung 9 gleichzeitig kalibriert, so daß die gewünschten Toleranzen zum Innendurchmesser des Zylinders 1 eingehalten werden können. Da insbesondere bei der Verwendung einer derartigen Kolben-Zylinder-Anordnung als Stoßdämpfer im Betrieb eine Erwärmung des Gesamtsystems auftritt, erlaubt dieser verbleibende Freiraum im Nutgrund innerhalb gewisser Grenzen auch eine Ausdehnung des Dichtungsmaterials in die Nut hinein, so daß der Verschleiß der Dichtung auf der an die Ränder angrenzenden zylindrischen Umfangsfläche der Dichtung 9 herabgesetzt wird. Der Kolben 2 ist über seine Höhe insgesamt praktisch kippfrei abgestützt. Die Dichtung 9 stützt sich an dem einen Nutenenden auf der Innenseite des Umlaufstegs 12 ab.

In Fig. 5 ist die Positionierung der Dichtung 9 in stark vergrößertem Maßstab in einem Teilschnitt entsprechend Fig. 4 dargestellt. Die Dichtung 9 besteht hierbei aus einem homogenen Material, das bei der vorbeschriebenen Warmumformung teilweise in die längsverlaufenden Nuten 11 und die Quernuten 11.1 eingeformt wird, während andererseits sich die längslaufenden Stützstege 10 sowie der Umlaufsteg 12 entsprechend in das Material einformen. Zur Verdeutlichung ist das in die längslaufende Nut 11 eingeformte Material mit einer Kreuzschraffur versehen, um deutlich zu machen, daß die längsverlaufenden Nuten 11 nicht vollständig ausgefüllt werden.

Um bei der Warmumformung das Material der Dichtung 9 in der längslaufenden Nut 11 im Übergangsbereich B zum Umlaufsteg 12 nicht überbeanspruchen, ist hierbei vorgesehen, daß die längslaufende Nut 11 in diesem Bereich in Richtung auf den Umlaufsteg 12 eine abnehmende, d. h. reduzierte Tiefe aufweist. Die so bewirkte Reduzierung der axialen Stützfläche für das Dichtungsmaterial am Umlaufsteg 12 wird durch die zusätzlichen, in Axialrichtung wirkenden Stützflächen der Quernuten 11.1 kompensiert und der Vorteil gewonnen, daß in diesem im späteren Betrieb hochbeanspruchten Bereich das Material durch die Warmumformung in seinem Gefüge geringer beansprucht ist und somit eine höhere Standfestigkeit aufweist.

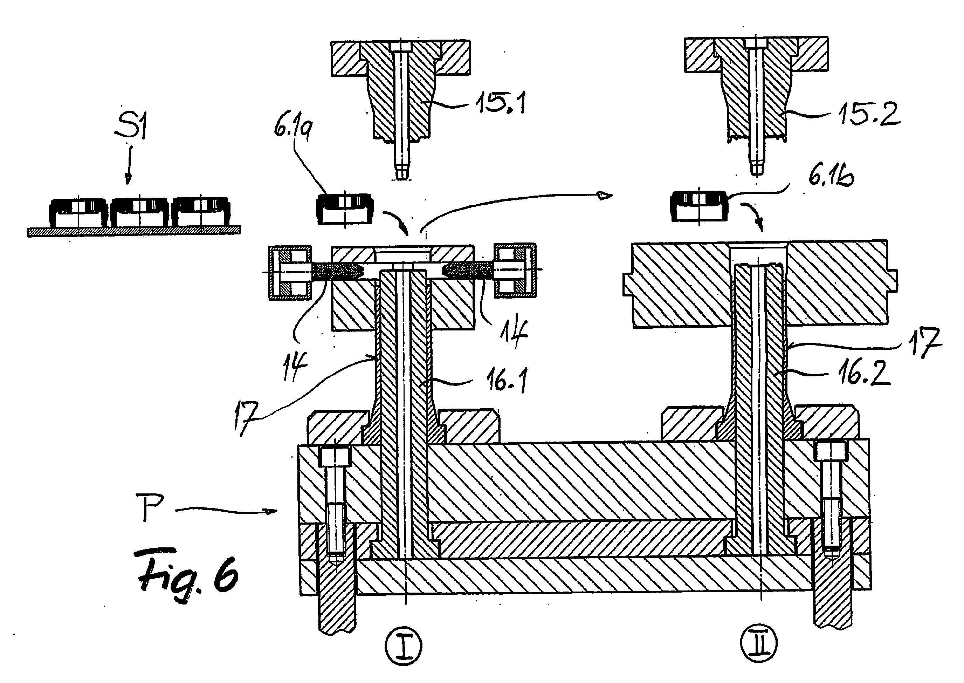

Anhand der Fig. 6, 7 und 8 wird das erfindungsgemäße Verfahren zur Herstellung eines Kolbenkörpers der in Fig. 4 gezeigten Form näher erläutert. Nachdem zunächst in einem ersten Schritt aus einem sinterbaren metallurgischen Pulver ein Grünling entsprechend Fig.2 gepreßt und anschließend zu einem Rohling 6.1 fertig gesintert worden ist, werden, wie in Fig. 6 dargestellt, jeweils aus einem Vorrat S1 von Rohlingen 6.1 ein Rohling 6.1a entnommen und einer Preßeinrichtung P zugeführt, die eine erste Preßstelle I und eine zweite Preßstelle II aufweist.

Die erste Preßstelle I ist neben dem üblichen Oberstempel 15.1 und Unterstempel 16 mit radial geführten Prägewerkzeugen 14 versehen, über die, wie nachstehend noch näher erläutert werden wird, die Quernuten 11.1 in die Stützstege 10 eingebracht werden.

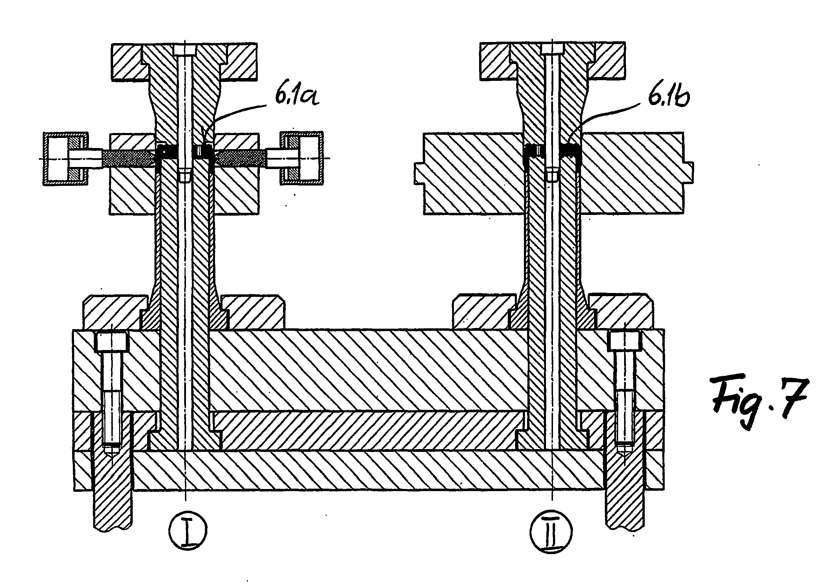

Der im voraufgegangenen Prägeschritt in der Preßstelle I mit Quernuten versehene Rohling 6.1b wird dann der zweiten Preßstelle II zugeführt, in der der so vorbereitete Rohling 6.1b sowohl in bezug auf die Kolbenendflächen als auch in bezug auf den äußeren Umfang des Umlaufsteges und der Stützstege entsprechend zu einem fertigen Kolbenkörper 6 kalibriert wird. Dieser Vorgang ist in Fig. 7 dargestellt.

In der Preßstelle II ist dem beweglichen Oberstempel 15.2 ist ein Unterstempel 16.2 zugeordnet, dessen Formoberfläche der Formoberfläche des einzulegenden Rohlings 6.1a bzw. 6.1b entspricht. In der ersten Preßstelle I wird durch den bewegbaren Stempel 15.1 und durch den feststehenden Gegenstempel 16.1 der Rohling 6.1a praktisch nur gehalten, während in der zweiten Preßstelle II der Preßstempel 15.2 in der Weise mit Druck beaufschlagt wird, daß eine kalibrierende Endverformung des eingelegten Rohlings 6.1b zur Bildung des fertigen Kolbenkörpers 6 stattfindet.

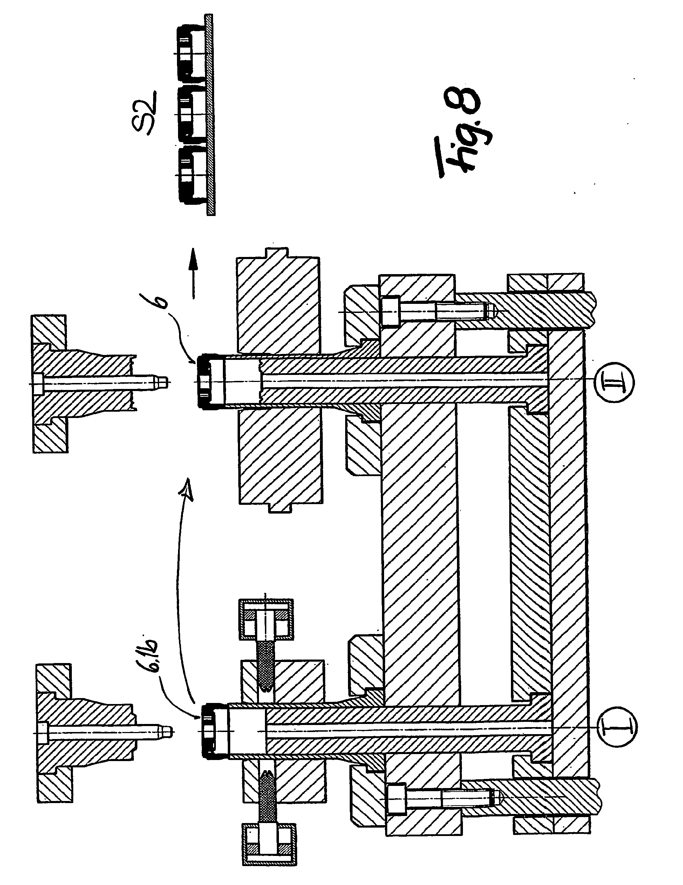

Wie in Fig. 8 dargestellt, werden anschließend die Preßstempel 15 zurückgezogen und über ein Ausstoßwerkzeug 17 an beiden Preßstellen der jetzt mit Quernuten versehene Rohling 6.1b und der fertig kalibrierte Kolbenkörper 6 aus der Preßform ausgeschoben, so daß der Rohling 6.1b zur Preßstelle II transportiert werden kann und der fertige Kolbenkörper 6 in einem Lager S2 abgelegt werden kann, aus dem dann die fertigen Kolbenkörper für das Aufbringen der manschettenförmigen Dichtung 9 entnommen werden.

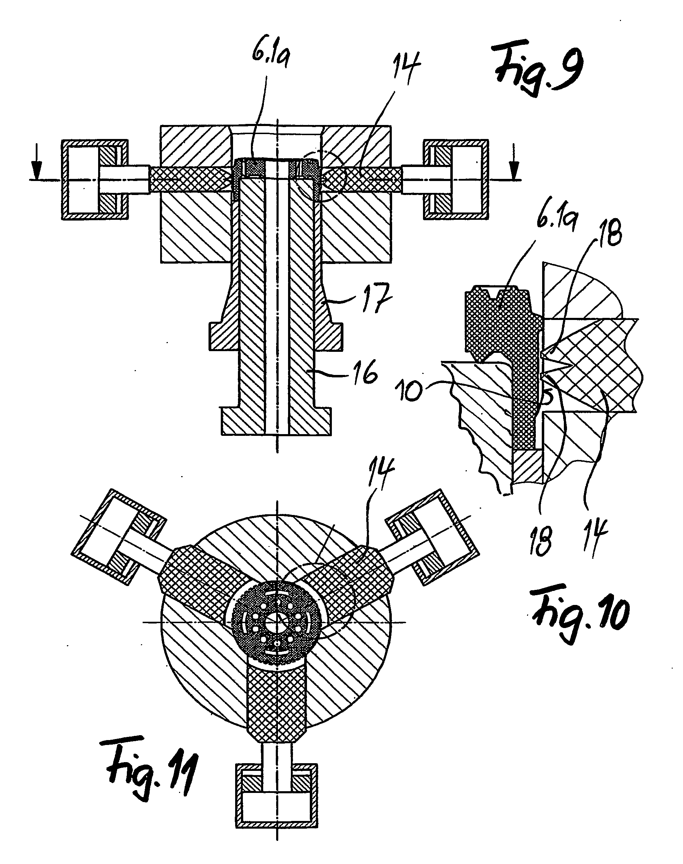

In Fig. 9 ist in einem Vertikalschnitt durch die erste Preßstelle I die Anordnung mit eingelegtem Rohling 6.1a dargestellt. Der eingefahrene Oberstempel 15.1 ist hierbei nicht dargestellt. Die Prägewerkzeuge 14 sind in das Material der Stützstege 10 eingedrückt und die Quernuten 11.1 geformt. Dies ist der vergrößerten Darstellung in Fig. 10 zu entnehmen.

Die radial zustellbaren Prägewerkzeuge 14 sind schieberartig ausgebildet und, wie aus den Fig.6, 7, 10 und 11 ersichtlich, radial gegen den Rohling 6.1a zustellbar. Bei der hier dargestellten Ausführungsform sind drei Prägewerkzeuge 14 vorgesehen, die im gleichen Winkelabstand zueinander angeordnet sind. Je nach Größe kann die Anordnung von mehr als drei Prägewerkzeugen vorgesehen werden. Die Anordnung von nur zwei diametral gegenüberliegenden Prägewerkzeugen ist zwar grundsätzlich möglich.

Wie aus der vergrößerten Darstellung gem. Fig. 10 ersichtlich, weist jedes Prägewerkzeug 14 für die Einformung von jeweils zwei Quernuten 11.1 in die Stützstege 10 eines Rohlings 6.1 zwei parallele schneidenartige Prägekanten 18 auf, durch die bei Druckbeaufschlagung der Prägewerkzeuge 14 unter Kaltverformung des gesinterten Materials entsprechend Fig. 7 Material verdrängt wird und die Quernuten 11.1 gebildet werden. Wie Fig. 10 erkennen läßt, erfolgt diese Kaltumformung nur über einen Teil der Gesamthöhe der Stützstege 10, so daß die Quernuten 11.1 entstehen, die eine geringere Tiefe aufweisen als die Nuten 11.

Der Form- und Kalibriervorgang kann auch mit nur einer Preßstelle ausgeführt werden, die im Aufbau im wesentlichen der Preßstelle I entspricht. Lediglich der Oberstempel und der Unterstempel sind entsprechend dem Oberstempel 15.2 und dem Unterstempel 16.2 ausgebildet. Dementsprechend wird im ersten Schritt der Rohling 6.1a vom Oberstempel und Unterstempel nur fixiert, so daß die Quernuten 11.1 eingeformt werden können. Anschließend werden die Prägewerkzeuge 14 zurückgezogen und der Druck auf Oberstempel und Unterstempel erhöht und der Rohling kalibriert und erst dann der Form als fertiger Kolbenkörper entnommen.

## Patentansprüche

1. Pulvermetallurgisch hergestellter Kolbenkörper für eine Kolben-Zylinder-Anordnung, insbesondere Stoßdämpferkolben, mit einem einteiligen Kolbenkörper (6), der auf seiner Umfangsfläche in einem an eine Kolbenendfläche (4.1) angrenzenden Bereich mit einem umlaufenden, die Umfangsfläche überragenden Umlaufsteg (12) versehen ist, an den sich bis an die andere Kolbenendfläche (5.1) erstreckende, parallel mit Abstand nebeneinander angeordnete längslaufende Stützstege (10) anschließen, wobei jeweils zwei benachbarte Stützstege (10) eine nutförmige Ausnehmung (11) begrenzen, wobei auf den Kolbenkörper (6) eine manschettenförmige Dichtung (9) aus einem warmverformbaren Dichtungsmaterial so ausformbar ist, daß sowohl der Umlaufsteg (12) als auch die Stützstege (10) zumindest über einen Teil in ihrer Höhe in das Material der manschettenförmigen Dichtung (9) eingeformt sind, **dadurch gekennzeichnet, dass** wenigstens ein Teil der längslaufenden Stützstege (10) zwischen den beiden Kolbenendflächen (4.1, 5.1) mit wenigstens einer Quernut (11.1) versehen ist und wobei die nutförmigen Ausnehmungen (11) an ihrem dem Umlaufsteg (12) abgewandten Ende in Längsrichtung offen sind.

2. Kolbenkörper nach Anspruch 1, **dadurch gekennzeichnet, daß** die Tiefe der nutförmigen Ausnehmungen (11) an einem an den Umlaufsteg (12) angrenzenden Bereich (B) geringer ist als im Bereich der dem Umlaufsteg (12) abgewandten Endfläche (5.1)

3. Kolbenkörper nach Anspruch 1 oder 2, **dadurch gekennzeichnet, dass** wenigstens zwei Quernuten (11.1) vorgesehen sind.

4. Kolbenkörper nach einem der Ansprüche 1 bis 3, **dadurch gekennzeichnet, dass** die Quernut (11.1) eine geringere Tiefe aufweist als die nutförmige Ausnehmung (11).

5. Kolbenkörper nach einem der Anspruch 1 bis 4, **dadurch gekennzeichnet, dass** auf dem Kolbenkörper eine manschettenförmige Dichtung (9) aus einem warmverformbaren Kunststoff, vorzugsweise PTFE, mittels Warmumformen aufgeformt ist, wobei die Dichtung (9) die nutförmige Ausnehmung (11) nicht vollständig ausfüllt und die Quernuten (11.1) vollständig ausfüllt.

6. Verfahren zur Herstellung eines einteiligen Kolbenkörpers für eine Kolben-Zylinder-Anordnung, insbesondere Stoßdämpferkolben, der auf seiner Umfangsfläche in einem an eine Kolbenendfläche (4.1) angrenzenden Bereich mit einem umlaufenden, die Umfangsfläche überragenden Umlaufsteg (12) versehen ist, an den sich bis an die andere Kolbenendfläche (5.1) erstreckenden, parallel mit Abstand zueinander angeordnete längslaufende Stützstege (10) anschließen, wobei jeweils zwei benachbarte Stützstege (10) eine nutförmige Ausnehmung (11) begrenzen, die an ihren dem Umlaufsteg abgewandten Enden in Längsrichtung offen sind, **dadurch gekennzeichnet, daß** in einem ersten Schritt aus einem sinterbaren metallurgischen Pulver ein Grünling gepreßt wird, der den Umlaufsteg und die längslaufenden Stützstege aufweist, daß in einem zweiten Schritt der Grünling zu einem Rohling (6.1) fertig gesintert wird, daß in einem dritten Schritt zumindest in einen Teil der Stützstege (10) durch Kaltumformung mittels radial geführter Prägewerkzeuge (14) unter Materialverdrängung Quernuten (11.1) eingeformt werden und daß in einem vierten Schritt der so mit Quernuten (11.1) versehene Rohling (6.1) durch Pressen mit Kalibrierwerkzeugen auf seine Endform kalibriert wird.

7. Verfahren nach Anspruch 6, **dadurch gekennzeichnet, daß** wenigstens zwei radial gegen den Rohling preßbare Prägewerkzeuge (14) verwendet werden, die jeweils wenigsten eine schneidenartige Prägekante aufweist.

8. Verfahren nach Anspruch 6 oder 7, **dadurch gekennzeichnet, daß** eine preßeinrichtung (P) mit wenigstens zwei Preßstellen (I, II) verwendet wird, wobei in der ersten Preßstelle (I) ein Rohling (6.1a) mit Quernuten (11.1) versehen wird und gleichzeitig in der zweiten Preßstelle (II) ein mit Quernuten (11.1) versehener Rohling (6.1b) kalibriert wird.

9. Verfahren nach einem der Ansprüche 6 bis 8, **dadurch gekennzeichnet, dass** in dem dritten Schritt zur Erzeugung der Quernuten (11.1) der Rohling (6.1a) durch einen bewegbaren Oberstempel (15.1) und einen feststehenden Unterstempel (16.1) praktisch nur gehalten wird, während die Quernuten (11.1) von dem radial geführten Prägewerkzeug (14) über eine geringere Tiefe als die Tiefe der nutförmigen Ausnehmung (11) in die Stützstege (10) eingebracht werden.

## Claims

1. A piston body produced by powder metallurgy for a piston / cylinder arrangement, in particular a shock-absorber piston, having a one-part piston body (6) which is provided on its peripheral face in an area adjacent to a piston-end face (4.1) with a circulating continuous web (12) which projects beyond the peripheral face and which is adjoined by longitudinally extending support webs (10) which extend to the other piston-end face (5.1) and which are arranged parallel to and adjacent to one another at a distance, wherein two adjacent support webs (10) bound a groove-shaped recess (11) in each case, wherein a collar-shaped seal (9) made of a thermally deformable sealing material is capable of being formed on the piston body (6) in such a way that both the continuous web (12) and the support webs (10) are formed in the material of the collar-shaped seal (9) at least over a part of their height, **characterized in that** at least part of the longitudinally extending support webs (10) between the two piston-end faces (4.1, 5.1) is provided with at least one transverse groove (11.1), wherein the groove-shaped recesses (11) are open in the longitudinal direction at their end facing away from the continuous web (12).

2. A piston body according to Claim 1, **characterized in that** the depth of the groove-shaped recesses (11) is less in an area (B) adjacent to the continuous web (12) than in the area of the end face (5.1) facing away from the continuous web (12).

3. A piston body according to Claim 1 or 2, **characterized in that** at least two transverse grooves (11.1) are provided.

4. A piston body according to any one of Claims 1 to 3, **characterized in that** the transverse groove (11.1) has a depth less than that of the groove-shaped recess (11).

5. A piston body according to any one of Claims 1 to 4, **characterized in that** a collar-shaped seal (9) made of a thermally deformable plastics material, preferably PTFE, is formed on the piston body by means of thermal deformation, wherein the seal (9) does not completely fill the groove-shaped recess (11) and does completely fill the transverse grooves (11.1).

6. A method of producing a one-part piston body for a piston / cylinder arrangement, in particular a shock-absorber piston, which is provided on its peripheral face in an area adjacent to a piston-end face (4.1) with a circulating continuous web (12) which projects beyond the peripheral face and which is adjoined by longitudinally extending support webs (10) which extend to the other piston-end face (5.1) and which are arranged parallel to and at a distance from one another, wherein two adjacent support webs (10) bound a groove-shaped recess (11) in each case and are open in the longitudinal direction at their ends facing away from the continuous web, **characterized in that** in a first step a green compact comprising the continuous web and the longitudinally extending support webs is pressed from a metallurgical powder capable of being sintered, in a second step the green compact is finally sintered to form a blank (6.1), in a third step stamping tools (14) guided radially are used to form, under material displacement, transverse grooves (111.1) in at least a part of the support webs (10) by cold deformation, and in a fourth step the blank (6.1) provided with transverse grooves (11.1) in this way is calibrated to its final form by pressing with calibrating tools.

7. A method according to Claim 6, **characterized in that** use is made of at least two stamping tools (14) which are capable of being pressed radially against the blank and which [have] at least one blade-type stamping edge in each case.

8. A method according to Claim 6 or 7, **characterized in that** a pressing device (**P**) with at least two press locations (**I**, **II**) is used, wherein a blank (6.1a) is provided with transverse grooves (11.1) in the first press location (I), whilst a blank (6.1b) provided with the transverse grooves (11.1) is simultaneously calibrated in the second press location (**II**).

9. A method according to any one of Claims 6 to 8, **characterized in that** in the third step for producing the transverse grooves (11.1) the blank (6. lea) is in practice only held by a movable upper stamp (15.1) and a stationary lower stamp (16.1), whilst the transverse grooves (11.1) are formed in the support webs (10) by the radially guided stamping tool (14) over a depth of less than the depth of the groove-shaped recess (11).

## Revendications

1. Élément de piston fabriqué selon une technique de la métallurgie des poudres pour un dispositif piston-cylindre, en particulier piston d'amortisseur, avec un élément de piston en une pièce (6), qui est pourvu sur sa surface périphérique d'une nervure périphérique circonférentielle (12), saillante sur la surface périphérique, dans une région adjacente à une surface d'extrémité de piston (4.1), nervure à laquelle se raccordent des nervures d'appui longitudinales (10) disposées parallèlement à distance l'une de l'autre et s'étendant jusqu'à l'autre surface d'extrémité de piston (5.1), dans lequel deux nervures d'appui longitudinales voisines (10) délimitent chaque fois un évidement en forme de rainure (11), dans lequel un joint d'étanchéité (9) en forme de manchette en une matière d'étanchéité déformable à chaud est déformable sur l'élément de piston (6) de telle manière qu'aussi bien la nervure périphérique (12) que les nervures d'appui (10) soient enfoncées sur une partie de leur hauteur dans la matière du joint d'étanchéité (9) en forme de manchette, **caractérisé en ce qu'**au moins une partie des nervures d'appui longitudinales (10) est pourvue d'au moins une rainure transversale (11.1) entre les deux surfaces d'extrémité de piston (4.1, 5.1) et dans lequel les extrémités des évidements en forme de rainures (11) sont ouvertes sur la longueur, à l'opposé de la nervure périphérique (12).

2. Élément de piston selon la revendication 1, **caractérisé en ce que** la profondeur des évidements en forme de rainures (11) dans une région (B) adjacente à la nervure périphérique (12) est plus petite que dans la région de la surface d'extrémité (5.1) située à l'opposé de la nervure périphérique (12).

3. Élément de piston selon la revendication 1 ou 2, **caractérisé en ce qu'**il est prévu au moins deux rainures transversales (11.1).

4. Élément de piston selon l'une quelconque des revendications 1 à 3, **caractérisé en ce que** la rainure transversale (11.1) est moins profonde que l'évidement en forme de rainure (11).

5. Élément de piston selon l'une quelconque des revendications 1 à 4, **caractérisé en ce qu'**un joint d'étanchéité en forme de manchette (9) en une matière plastique déformable à chaud, de préférence en PTFE, est formé par formage à chaud sur l'élément de piston, dans lequel le joint d'étanchéité (9) ne remplit pas entièrement l'évidement en forme de rainure (11) et remplit entièrement les rainures transversales (11.1).

6. Procédé de fabrication d'un élément de piston en une pièce pour un dispositif piston-cylindre, en particulier un piston d'amortisseur, qui est pourvu sur sa surface périphérique d'une nervure périphérique circonférentielle (12), saillante sur la surface périphérique, dans une région adjacente à une surface d'extrémité de piston (4.1), nervure à laquelle se raccordent des nervures d'appui longitudinales (10) disposées parallèlement à distance l'une de l'autre et s'étendant jusqu'à l'autre surface d'extrémité de piston (5.1), dans lequel deux nervures d'appui longitudinales voisines (10) délimitent chaque fois des évidements en forme de rainures (11), dont extrémité située à l'opposé de la nervure périphérique est ouverte sur le sens de la longueur, **caractérisé en ce que**, dans une première étape, on presse à partir d'une poudre métallurgique frittable, une ébauche verte qui présente la nervure périphérique et les nervures d'appui longitudinales, **en ce que**, dans une deuxième étape, on fritte l'ébauche verte en un demi-produit (6.1), **en ce que**, dans une troisième étape, on forme des rainures transversales (11.1) au moins dans une partie des nervures d'appui (10) par formage à froid au moyen d'outils de refoulement guidés radialement (14) avec déplacement de matière, et **en ce que**, dans une quatrième étape, on calibre le demi-produit (6.1) ainsi pourvu de rainures transversales (11.1) à sa forme finale par pressage avec des outils de calibrage.

7. Procédé selon la revendication 6, **caractérisé en ce que** l'on utilise au moins deux outils de refoulement (14) pouvant être pressés radialement contre le demi-produit, qui présentent chacun au moins une arête de refoulement de type coupant.

8. Procédé selon la revendication 6 ou 7, **caractérisé en ce que** l'on utilise un dispositif de presse (P) avec au moins deux stations de presse (I, II), dans lequel un demi-produit (6.1a) est pourvu de rainures transversales (11.1) dans la première station de presse (I) et en même temps un demi-produit (6.1b) pourvu de rainures transversales (11.1) est calibré dans la deuxième station de presse (II).

9. Procédé selon l'une quelconque des revendications 6 à 8, **caractérisé en ce que**, dans la troisième étape pour la production des rainures transversales (11.1), le demi-produit (6.1a) n'est pratiquement maintenu que par un poinçon supérieur mobile (15.1) et un poinçon inférieur immobile (16.1), pendant que les rainures transversales (11.1) sont pratiquées dans les nervures d'appui (10) par l'outil de refoulement guidé radialement (14) sur une profondeur inférieure à celle de l'évidement en forme de rainure (11).
